(19) Europäisches Patentamt
European Patent Office
Office européen des brevets

(11) Veröffentlichungsnummer: **0 239 734**
**B1**

(12) # EUROPÄISCHE PATENTSCHRIFT

(45) Veröffentlichungstag der Patentschrift:
**29.08.90**

(51) Int. Cl.[5]: **C08J 3/20**, C08L 21/00

(21) Anmeldenummer: **87101163.1**

(22) Anmeldetag: **28.01.87**

(54) **Verfahren zur Herstellung eines rieselfähigen, gefüllten Kautschukpulvers.**

(30) Priorität: **01.03.86 DE 3606743**

(43) Veröffentlichungstag der Anmeldung:
**07.10.87 Patentblatt 87/41**

(45) Bekanntmachung des Hinweises auf die Patenterteilung:
**29.08.90 Patentblatt 90/35**

(84) Benannte Vertragsstaaten:
**BE DE ES FR GB IT NL**

(56) Entgegenhaltungen:
**FR-A- 2 145 933**
**FR-A- 2 532 320**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, - RSP Patente / PB 15 - Postfach 13 20, D-4370 Marl 1(DE)**

(72) Erfinder: **Müller, Michael, Dr., Mecklenbecker Strasse 177, D-4400 Münster(DE)**
Erfinder: **Kleinert, Walter, Dr., Geeste 81, D-4282 Velen(DE)**

EP 0 239 734 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung ist ein Verfahren zur Herstellung eines rieselfähigen, gefüllten Kautschukpulvers durch Vereinigen eines Hilfsstoffe enthaltenden wäßrigen Kautschuklatex mit einer wäßrigen Füllstoffsuspension unter Rühren, Abtrennen der wäßrigen Phase sowie abschließendes Trocknen des Kautschukpulvers unter ständiger Bewegung sowie nach diesem Verfahren hergestellte rieselfähige, gefüllte Kautschukpulver.

Die Herstellung von rieselfähigen, gefüllten Kautschukpulvern ist grundsätzlich bekannt. So beschreibt u. a. DE-C 28 22 148 die Herstellung. Wesentlich bei der bekannten Arbeitsweise ist es, daß ein sehr enger, saurer pH-Wertbereich einzustellen ist, wobei die Ausfällung des Kautschuks zwangsläufig in Gegenwart von Wasserglas und Aluminiumsalzen erfolgen muß. Dadurch enthält das fertige Kautschukpulver in jedem Falle Silizium- und Aluminiumverbindungen als störende Füllstoffanteile. Ferner hat es sich in der Praxis gezeigt, daß die so erhaltenen Kautschukpulver z. B. bei niedrigen Füllgraden mechanisch wenig beanspruchbar, da zu weich, sind bzw. z. B. bei hohen Füllstoffgehalten sehr stark zu unerwünschtem, d. h. gefährlichem, Stauben neigen.

Polyamine sind in der Technik als Flockungsmittel bekannt. Sie haben die Aufgabe, sehr feine und schwer abtrennbare Teilchen (Trüben) schnell und vollständig auszufällen. Die niedergeschlagenen Teilchen fallen als Flocken von unregelmäßiger Form und Größe an.

Niedermolekulare Polyamine wurden bereits für die Kunststoffindustrie beschrieben (DE-C 11 95 941). Gemäß der genannten Druckschrift werden sie u. a. zur Herstellung von Elastomeren/Kieselsäure-Mischungen eingesetzt. Als Besonderheit wird angegeben, daß der eingesetzte Latex unter Verwendung bestimmter Emulgatoren hergestellt worden sein muß. Gemäß dieser Druckschrift kann nicht die gesamte Breite der brauchbaren Emulgatoren bzw. Füllstoffe zum Einsatz kommen. Die Herstellung von rieselfähigem Kautschukpulver wird nicht beschrieben.

Aufgabe der Erfindung war es, ein Verfahren zu entwickeln, das in bezug auf den erforderlichen pH-Wertbereich deutlich unempfindlicher ist und das auf den zwangsläufigen Einsatz von Silizium- und Aluminiumverbindungen verzichtet.

Diese Aufgabe wurde dadurch gelöst, daß die Vereinigung von Kautschuklatex und Füllstoffsuspension in Gegenwart von 0,1 bis 15 Gew.-Teilen – gerechnet auf 100 Gew.-Teile Kautschukfeststoff – eines Amins mit einem Molekulargewicht im Bereich von $10^4$ bis $10^8$ (bestimmt als Gewichtsmittel) erfolgt, das eine Struktureinheit der allgemeinen Formel

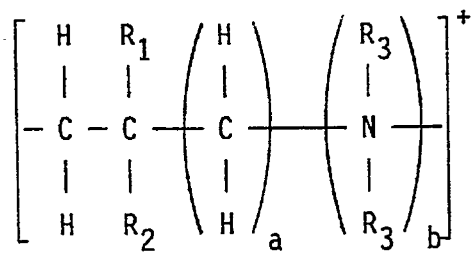 $[A]^-$ aufweist,

in der R1 = H–, HO–, Alkylrest mit 1 bis 3 C-Atomen,

$R_2$ = H–, 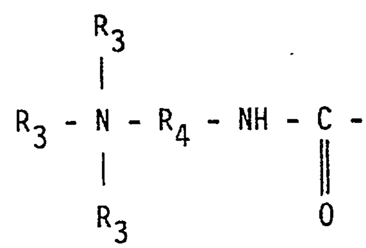 oder

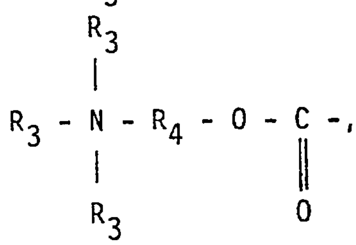

$R_3$ = H–, Alkyl- oder Alkylenrest mit 1 bis 6 C-Atomen,
$R_4$ = Alkylenrest mit 1 bis 12 C-Atomen,
b = 0 oder 1, wobei für b = 0 der Rest $R_2 \neq$ H und a = 0, für b = 1 der Rest $R_2$ = H und a = 0 oder 1 sein muß,

bedeuten und $[A]^-$ für das Hydroxidion oder Anion einer organischen oder anorganischen Säure steht.

Unter den hochmolekularen Aminen sind Produkte bevorzugt, die sich in folgende 4 Gruppen aufteilen lassen:

I. Diese Amine besitzen eine Struktureinheit der oben abgedruckten, allgemeinen Formel, in der
$R_1 = R_2 = H–$
$R_3 = H–$, Alkylrest mit 1 bis 6 C-Atomen
$a = 0$
$b = 1$
bedeuten.

Die Amine der Gruppe I besitzen im allgemeinen ein Molekulargewicht im Bereich von $10^4$ bis $5 \cdot 10^5$, vorzugsweise von $4 \cdot 10^4$ bis $2 \cdot 10^5$.

II. Diese Amine besitzen eine Struktureinheit der oben abgedruckten, allgemeinen Formel, in der
$R_2 = H–$
$R_1 = HO–$
$R_3 = H–$, Alkylrest mit 1 bis 6 C-Atomen
$a = 1$
$b = 1$
bedeuten.

Das Molekulargewicht der Amine der Gruppe II liegt im allgemeinen im Bereich von 104 bis $8 \cdot 10^6$, vorzugsweise von $10^4$ bis $2 \cdot 10^5$.

III. Die Amine dieser Gruppe weisen eine Struktureinheit der oben abgedruckten, allgemeinen Formel, auf, in der
$R_0 = H–$
$R_1 = H–$, Alkylrest mit 1 bis 3 C-Atomen

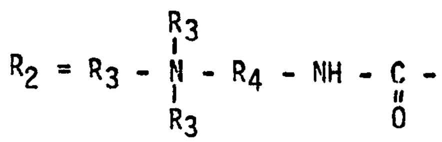

$R_3 = H–$, Alkylrest mit 1 bis 6 C-Atomen
$R_4 =$ Alkylenrest mit 1 bis 12 C-Atomen
$a = 0$
$b = 0$ bedeuten.

Ihr Molekulargewicht beträgt im allgemeinen $10^5$ bis $10^8$, vorzugsweise $10^5$ bis $8 \cdot 10^6$.

IV. Diese Amine besitzen eine Struktureinheit der oben abgedruckten, allgemeinen Formel, in der
$R_0 = H–$
$R_1 = H–$, Alkylrest mit 1 bis 3 C-Atomen

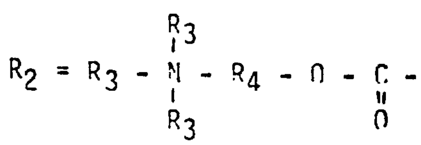

$R_3 = H–$, Alkylrest mit 1 bis 6 C-Atomen
$R_4 =$ Alkylenrest mit 1 bis 12 C-Atomen
$a = 0$
$b = 0$
bedeuten.

Das Molekulargewicht liegt im allgemeinen bei $10^5$ bis $10^8$, vorzugsweise $10^5$ bis $8 \cdot 10^6$.

Allgemein gesprochen liegt das Molekulargewicht der Amine im Bereich von $10^4$ bis $10^8$, vorzugsweise bei $10^4$ bis $8 \cdot 10^6$. Die angeführten Molekulargewichte sind als Gewichtsmittel ausgedrückt. Die hochmolekularen Amine können geradkettig oder verzweigt sein.

Die erfindungsgemäßen hochmolekularen Amine werden dem Kautschuklatex in Mengen von 0,1 bis 15 Gew.-Teilen, vorzugsweise in Mengen von 0,3 bis 5 Gew.-Teilen, insbesondere in Mengen von 0,3 bis 2 Gew.-Teilen -jeweils bezogen auf 100 Gew.-Teile Kautschukfeststoff - zugesetzt.

Die erfindungsgemäßen Amine sind bekannt (Kirk-Othmer, Encyclopedia of Chemical Technology, 3rd Edition, Vol. 10, Seiten 489 bis 523 (1980)) und können im Handel erhalten werden.

Die Anionen $[A^-]$ besitzen in bezug auf die Erfindung keine entscheidende Bedeutung. $[A^-]$ steht für das Hydroxidion oder das Anion einer organischen oder anorganischen Säure. wie z. B. Halogenid, Sulfat, Hydrogensulfat, Phosphat, Acetat oder Oxalat.

Geeignete Kautschuklatices sind einmal solche auf Basis von Naturkautschuk bzw. abgebautem Naturkautschuk und zum anderen solche aus Homo- und Mischpolymerisaten von konjugierten Dienen, wie sie durch radikalische Polymerisation unter Verwendung eines Emulgators nach bekannten Verfahren des Standes der Technik hergestellt werden können (siehe z. B. Houben-Weyl, Methoden der organischen Chemie, Band XIV/1 [1961], "Herstellung von Kautschuken", Seite 712 ff.; Ullmanns Enzyklopädie der technischen Chemie, 9. Band [1957], Seiten 325 bis 339 sowie DE-PS 679 587, 873 747 und 11 30 597). Es können gleichfalls Mischungen von Kautschuklatices eingesetzt werden. Abgebaute Naturkautschuklatices können z. B. nach dem Verfahren der GB-PS 749 955 erhalten werden. Bevorzugt werden jedoch abgebaute Naturkautschuklatices eingesetzt, wie man sie gemäß GB-PS 749 955 oder DE-OS 36 06 745 gewinnt. Letzteres Verfahren ist dadurch gekennzeichnet, daß man den Naturkautschuk in Latexform mit Inertgas, verdünntem Sauerstoff und/oder einer die Peroxidgruppe enthaltenden Verbindung bei Temperaturen von 60 bis 100 °C behandelt.

Als konjugierte Diene kommen dabei Butadien-(1,3), Isopren, Piperylen, 2-Chlorbutadien-(1,3), 2,3-Dichlorbutadien-(1,3) und 2,3-Dimethylbutadien-(1,3) infrage. Die Mischpolymerisate können sowohl aus Mischungen dieser konjugierten Diene als auch aus Mischungen dieser konjugierten Diene mit Vinylverbindungen, wie z. B. Styrol, Alpha-Methylstyrol, Acrylnitril, Acrylsäure, Methacrylsäure und Vinylpyridin hergestellt werden.

Der Feststoffgehalt der Latices beträgt im allgemeinen 20 bis 35 Gew.-%.

Als aktive Füllstoffe kommen vorzugsweise die in der Kautschuk-Industrie gebräuchlichen Ruße sämtlicher Aktivitätsstufen infrage, wie z. B. SAF-, ISAF-, HAF-Ruße einschließlich deren Abwandlungen FEF-, GPF-, APF-, SRF- und MT-Ruße. Es können jedoch auch Farbruße oder Leitfähigkeitsruße mit Oberflächen von bis zu etwa 1 300 $m^2/g$ (BET) eingesetzt werden.

Auch (gefällte, pyrogene) hochaktive Kieselsäuren mit Oberflächen von 50 $m^2/g$ bis 600 $m^2/g$ (BET) können als Füllstoffe eingesetzt werden. Bevorzugt werden die Kieselsäuren mit handelsüblichen Haftvermittlern hydrophobiert (z. B. EP-OS 126 871). Die Herstellung einer geeigneten Kieselsäure wird beispielsweise in der US-PS 1 043 282 beschrieben.

Kombinationen von Rußen mit hellen Füllstoffen innerhalb der für die einzelnen Komponenten angegebenen Grenzen sind möglich.

Die einzusetzende Menge an Ruß kann 20 Gew.-Teile bis zu 300 Gew.-Teile pro 100 Gew.-Teile Kautschuk, vorzugsweise 35 Gew.-Teile bis 120 Gew.-Teile auf 100 Gew.-Teile Kautschuk, betragen. Die Menge an mineralischen Substanzen liegt zwischen 20 Gew.-Teilen und 300 Gew.-Teilen pro 100 Gew.-Teile Kautschuk, vorzugsweise zwischen 30 Gew.-Teilen und 150 Gew.-Teilen auf 100 Gew.-Teile Kautschuk.

Die Füllstoffsuspensionen werden im allgemeinen so hergestellt, daß man den oder die Füllstoffe in Wasser aufschlämmt und anschließend in einem handelsüblichen sogenannten Emulgier- oder Dispergier-Gerät solange dispergiert, bis die einzelnen Füllstoffpartikel einen mittleren Korngrößendurchmesser von < 10 µm (Volumenmittel, gemessen nach DIN 53 477) haben.

Sollen Weichmacheröle eingearbeitet werden, kann man die dafür gebräuchlichen Raffinerie-Produkte verwenden, die je nach dem Verwendungszweck der Vulkanisate bevorzugt aus aromatischen, naphthenischen bzw. paraffinischen Kohlenwasserstoffen bestehen. Die einzusetzende Menge an Weichmacherölen liegt zwischen 1 und 100 Gew.-Teilen, bezogen auf 100 Gew.-Teile Kautschuk. Zur Herstellung eines Weichmacheröl enthaltenden, füllstoffhaltigen Kautschuks kann man beispielsweise so vorgehen, daß das Weichmacheröl in geeigneten Mischaggregaten (z. B. Fluidmischern) mit dem nach dem erfindungsgemäßen Verfahren hergestellten, füllstoffhaltigen Kautschuk vereinigt wird.

Zur Durchführung des Verfahrens kann der pH-Wert der Füllstoffsuspension über weite Bereiche variieren. Wesentlich bei der Einstellung des pH-Wertes ist es, daß die endgültige Mischung aus Kautschuklatex und Füllstoffsuspension einen pH-Wert im Bereich von 2 bis 11, vorzugsweise im Bereich von 4 bis 7 aufweist. Sollte nach dem Vermischen festgestellt werden, daß der pH-Wert nicht zu der gewünschten vollständigen Fällung geführt hat, so kann dieser Wert auch in der Mischung selbst noch nachreguliert werden.

Zur Einstellung des pH-Wertes werden die üblichen Mineralsäuren, wie z. B. Schwefelsäure, Phosphorsäure oder Salzsäure verwendet. Bevorzugte Säure ist Schwefelsäure.

Der pH-Wert in der Endmischung wird vorzugsweise so gewählt, daß er bei Einsatz von synthetischen Kautschuklatices im sauren Bereich und bei Einsatz von Naturkautschuklatices im alkalischen Bereich liegt. Darüber hinaus sollte der End-pH-Wert bei Ruß-gefüllten Ansätzen in Abhängigkeit von der Aktivitätsstufe des eingesetzten Rußes gewählt werden. Mit steigender Aktivität des Rußes kann der pH-Wert niedriger gehalten werden.

Wesentlich für den Erfolg des Verfahrens ist die richtige Vermischung von hochmolekularem Amin und Latex. So sollte der Latex vor der Aminzugabe eine Temperatur im Bereich von Raumtemperatur bis zu 95 °C aufweisen. Die Vermischung sollte so ausgeführt werden, daß keine lokale Überkonzentration des Amins auftritt; eine Koagulation ist in jedem Fall zu vermeiden.

Nach der Vermischung von Latex und Amin sollte das Gemisch vorsichtig gehandhabt werden, d. h. es sollen keine wesentlichen Scherkräfte einwirken, Temperatur, Ionenstärke o. ä. sollten - wenn möglich - konstant gehalten werden.

Die Fällung erfolgt durch Vereinigen der Füllstoffsuspension mit dem das erfindungsgemäße Amin

enthaltenden Kautschuklatex. Die Fällung kann sowohl diskontinuierlich als auch kontinuierlich gestaltet werden.

Es ist auch möglich, den gesamten das hochmolekulare Amin enthaltenden Kautschuklatex mit nur einem Teil der vorgesehenen Füllstoffsuspension zu vereinigen. Bei diesem Teil handelt es sich im allgemeinen um 50 bis 98 Gew.-%, vorzugsweise um 60 bis 95 Gew.-%, der insgesamt vorgesehenen Menge an Füllstoffsuspension. Nach erfolgter Fällung wird dann der Rest der Füllstoffsuspension hinzugefügt.

Die Korngröße kann durch Variieren der Aminmenge beeinflußt werden, indem durch steigende (fallende) Aminanteile die Korngrößenverteilung zu kleineren (größeren) Teilchendurchmessern führt.

Mit Hilfe des erfindungsgemäßen Verfahrens ergeben sich Kautschukpulver, deren einzelnes Pulverkorn aus Primärteilchen mit einem Durchmesser von 3 bis 100 µm, vorzugsweise von 10 bis 30 µm, gebildet wird, wobei der Füllstoff zwischenden einzelnen Primärteilchen eingelagert ist.

Gegenüber dem Stand der Technik bietet das erfindunsgemäße Verfahren den Vorteil einer unempfindlichen Arbeitsweise. Es ist möglich, alle in der Herstellungstechnologie für Kautschuk üblichen Emulgatoren zu verwenden. Der pH-Wert kann in weiten Grenzen variieren, ohne daß es zu einem Qualitätsabfall des resultierenden Pulverkautschuks kommt. Da erfindungsgemäß auch im alkalischen Bereich gearbeitet werden kann, ist es möglich, ohne weiteres auch (abgebauten) Naturkautschuklatex zu verarbeiten. Ferner ergibt sich bei dem erfindungsgemäßen Verfahren der Vorteil, daß man ohne Silizium- und Aluminiumverbindungen arbeiten kann.

Das erfindungsgemäße Verfahren führt zu Pulverkautschuk-Typen mit einem engen Kornspektrum bei konstanter Rußmengenverteilung. Bei hohen Füllgraden ist der Füllstoff sicher gebunden, so daß es nicht zum unerwünschten Stauben kommt; selbst bei niederen Füllgraden wird eine mechanisch stabile Kornstruktur erreicht, die eine problemlose Lagerung und Handhabung des Pulverkautschuks erlaubt.

Die Messung der pH-Werte erfolgte mit Geräten der Firma Schott (Typ CG 822) bzw. der Firma Metrohm (Typ E 520).

Die Schertestmessungen und die Bestimmung der Druckfestigkeit erfolgten bei 20 °C (nach Jenike und Johannson im Flow Factor Tester -Verfahrenstechnik 2, 10, 68 (1976)).

Soweit nicht anders angegeben beziehen sich alle Angaben auf das Gewicht.

## Beispiele

### Beispiel 1 (Tabelle I)

Es wird ein handelsüblicher Kautschuklatex (Latex Typ 1502 der Bunawerke Hüls GmbH; Styrolgehalt: 23,5 Gew.-% - Rest Butadien; Feststoffgehalt: ca. 22 Gew.-%) verwendet. Bei dem hochmolekularen Amin wird ein Handelsprodukt gemäß Typ II der Beschreibung (SUPERFLOC®; $R_3$ = kurzkettiger Alkylrest; Molgewicht: ca. $5 \cdot 10^4$) eingesetzt.

Tabelle I

| Vers. Nr. | Ruß-Typ | Ruß-Gehalt *) | pH-Wert **) | Jenike-Test [N/m²] (0 Std.; 20 °C) |
|---|---|---|---|---|
| 1 | N 339 | 50 | 6,9 | 870 |
| 2 | N 339 | 150 | 6,8 | 420 |
| 3 | Raven 3200 | 50 | 5,7 | 660 |
| 4 | Raven 3200 | 35 + 5 ***) | 4,7 | 690 |
| 5 | Ketjenblack EC | 50 | 5,0 | 370 |
| 6 | Ketjenblack EC | 35 + 5 ***) | 4,6 | 390 |
| 7 | Ketjenblack EC | 17,5 + 2,5 ***) | 4,3 | 980 |

*) Gew.-Teile auf 100 Gew.-Teile Kautschukfeststoff

**) in der Fällflotte

***) Zugabe in zwei Schritten, davon der zweite Teil nach Ausfällung des Kautschuks

Der Latex wird in einem 0,5 m Kessel bei Raumtemperatur vorgelegt. Unter innigem Rühren (Propellerrührer, Durchmesser 18 cm, ca. 400 U/min) wird eine mit Wasser verdünnte Aminlösung (1 Gew.-%) hinzugefügt, so daß 1 Gew.-Teil Amin - bezogen auf 100 Gew.-Teile Kautschukfeststoff - in der Mischung vorhanden ist. Nach kurzer Verweilzeit (< 10 sec) wird eine wäßrige Rußsuspension (6 Gew.-%) zugegeben. Diese Suspension enthält die zur Erzielung des End-pH-Wertes erforderliche Menge Schwefelsäure.

Auf einem Bandfilter wird das Wasser vom ausgefällten Kautschukpulver abgetrennt. Das Pulver wird unter ständiger Bewegung im warmen Luftstrom getrocknet.

Beispiel 2 (Tabelle II)

Unter Verwendung des in Beispiel 1 eingesetzten Latex bzw. hochmolekularen Amins wird die Fällung wiederholt mit dem Unterschied, daß kontinuierlich gefällt wird. Zwei Stoffströme (1. Latex + Amin -Aminzugabe ca. 4 s vor der Vereinigung mit 2.; 2. Rußsuspension + Schwefelsäure) werden über ein Mischelement bei Raumtemperatur vereinigt.

Die Aufarbeitung erfolgt gemäß Beispiel 1.

Tabelle II

| Vers. Nr. | Ruß-Typ | Ruß-Gehalt *) | Ruß-Strom **) | Latex-Strom **) | Amin-Strom **) | pH-Wert ***) | Jenike-Test [N/m²] (0 Std.; 20 °C) |
|---|---|---|---|---|---|---|---|
| 1 | Corax® N 539 | 67 | 2 000 | 838 | 38,7 | 6,8 | 640 |
| 2 | Corax® N 539 | 97 | 2 500 | 649 | 30,0 | 6,9 | 440 |

*) Gew.-Teile auf 100 Gew.-Teile Kautschukfeststoff

**) Ruß-Strom (6 Gew.-% in Wasser) ausgedrückt in kg Suspension/h
Latex-Strom ausgedrückt in kg Latex/h
Amin-Strom (5 Gew.-% in Wasser) ausgedrückt in kg Lösung/h

***) in der Fällflotte

Beispiel 3 (Tabelle III)

Es wird ein handelsüblicher Nitrilkautschuklatex (PERBUNAN® - Typ N 3305; Acrylnitrilgehalt: 33 Gew.-%; Feststoffgehalt: ca. 25 Gew.-%) sowie ein handelsüblicher Chlorkautschuklatex (BAYPREN® -Typ 210; Feststoffgehalt: ca. 30 Gew.-%) verwendet.

Bei dem Nitrilkautschuklatex (Tabelle III, Versuche 1 bis 3) wird ein handelsübliches hochmolekulares Amin gemäß Typ III der Beschreibung (ROHAGIT®; $R_4$ ist ein kurzkettiger Alkylenrest; Molgewicht: ca. $10^6$; Viskosität (1 Gew.-% in Wasser, 20 °C - gemessen im Brookfield Viskosimeter, Spindel II, 6 U/min): ca. 1 700 mPa•s) eingesetzt. Als hochmolekulares Amin wird bei dem Chlorkautschuklatex (Tabelle III, Versuche 4 und 5) ein Handelsprodukt gemäß Typ IV der Beschreibung (ROHAGIT®; $R_1$ = $-CH_3$; $R_4$ ist ein kurzkettiger Alkylenrest; Molgewicht: ca. $10^5$; Viskosität (1 Gew.-% in Wasser; 20 °C - gemessen im Brookfield Viskosimeter I/6): ca. 120 mPa•s) verwendet.

Fällung und Aufarbeitung geschehen entsprechend Beispiel 1 mit der Ausnahme, daß vor der Fällung bei dem Latex die in der Tabelle III angeführte Temperatur eingestellt wird. Die Latices werden auf 20 Gew.-% Feststoffgehalt eingestellt.

Tabelle III

| Vers. Nr. | Ruß-Typ | Ruß-Gehalt *) | Temp. **) /°C/ | pH-Wert ***) | Jenike-Test /N/m²/ (0 Std.; 20 °C) |
|---|---|---|---|---|---|
| 1 | N 339 | 50 | 20 | 7,1 | 880 |
| 2 | Ketjenblack EC | 50 | 20 | 4,5 | 510 |
| 3 | Ketjenblack EC | 50 | 80 | 4,5 | 350 |
| 4 | N 550 | 50 | 20 | 5,2 | 910 |
| 5 | N 550 | 50 | 80 | 5,0 | 720 |

*) Gew.-Teile auf 100 Gew.-Teile Kautschukfeststoff

**) Temperatur des Latex vor der Fällung

***) in der Fällflotte

Beispiel 4 (Tabelle IV)

Es wird ein handelsüblicher Naturlatex (CV - constant viscosity; Feststoffgehalt: ca. 60 bis 70 Gew.-%) - unbehandelt (Versuchs-Nr. 1 -Tabelle IV) bzw. gemäß DE-OS 36 06 745 Versuchs-Nr. 2 - 8 - Tabelle IV) abgebaut - eingesetzt. Als hochmolekulares Amin wird eines vom Typ IV (gemäß Beispiel 3) verwendet.

Der Latex wird vor der Fällung auf einen Feststoffgehalt von 20 Gew.-% mit Wasser verdünnt. Der Rußsuspension wird keine Säure zugesetzt, es wird bei dem natürlichen pH-Wert des Naturkautschuklatex gearbeitet.

Fällung und Aufarbeitung erfolgt wie im Beispiel 1 beschrieben.

Die Defo-Härte wird gemäß DIN 53 514 bestimmt.

Tabelle IV

| Vers. Nr. | Ruß-Typ | Ruß-Gehalt *) | Temp. **) /°C/ | Defo-Härte | Amin-Gehalt *) | Jenike-Test [N/m²] (0 Std.; 20 °C) |
|---|---|---|---|---|---|---|
| 1 | N 339 | 50 | 20 | 2 800 | 1 | 550 |
| 2 | N 339 | 45 + 5 ***) | 80 | 1 800 | 1 | 610 |
| 3 | N 339 | 45 + 5 ***) | 80 | 1 200 | 1 | 790 |
| 4 | N 339 | 45 + 5 ***) | 80 | 700 | 1 | 980 |
| 5 | N 339 | 50 | 50 | 850 | 1 | 870 |
| 6 | N 339 | 40 + 10 ***) | 50 | 850 | 1 | 620 |
| 7 | N 339 | 40 + 10 ***) | 80 | 850 | 0,8 | 580 |
| 8 | N 339 | 30 + 20 ***) | 80 | 850 | 0,65 | 480 |

*) Gew.-Teile auf 100 Gew.-Teile Kautschukfeststoff

**) Temperatur des Latex vor der Fällung

***) Zugabe in zwei Schritten, davon der zweite Teil nach Ausfällung des Kautschuks

Beispiel 5 (Tabelle V)

Es wird ein abgebauter Naturkautschuklatex gemäß Beispiel 4 eingesetzt. Als hochmolekulares Amin wird eines vom Typ IV (gemäß Beispiel 3) verwendet.

Die Ausfällung und Aufarbeitung erfolgt wie im Beispiel 1 mit dem Unterschied, daß neben Ruß noch eine handelsübliche Kieselsäure (VN2-Degussa; BET-Oberfläche: ca. 130 $m^2/g$) eingesetzt wird. Die Oberfläche der Kieselsäure wurde mit einem handelsüblichen Haftverbesserer (EP-A 0 126 871) hydrophobiert.

Tabelle V

| Vers. Nr. | Ruß-Typ | Ruß-Gehalt *) | Kieselsäure-Gehalt *) | Amin-Gehalt *) | Jenike-Test [N/m²] (0 Std.; 20 °C) |
|---|---|---|---|---|---|
| 1 | - | - | 50 | 1 | 980 |
| 2 | - | - | 50 | 1,5 | 610 |
| 3 | N 339 | 40 | 15 | 1,3 | 1 100 |
| 4 | N 339 | 40 | 15 | 1 | 880 |
| 5 | N 339 | 40 | 15 | 0,5 | 520 |

*) Gew.-Teile auf 100 Gew.-Teile Kautschukfeststoff

**Patentansprüche**

1. Verfahren zur Herstellung eines rieselfähigen, gefüllten Kautschukpulvers durch Vereinigen eines Hilfsstoffe enthaltenden wäßrigen Kautschuklatex mit einer wäßrigen Füllstoffsuspension unter Rühren, Abtrennen der wäßrigen Phase sowie abschließendes Trocknen des Kautschukpulvers unter ständiger Bewegung, dadurch gekennzeichnet, daß die Vereinigung von Kautschuklatex und Füllstoffsuspension in Gegenwart von 0,1 bis 15 Gewichtsteilen – gerechnet auf 100 Gewichtsteile Kautschukfeststoff – eines Amins mit einem Molekulargewicht im Bereich von $10^4$ bis $10^8$ (bestimmt als Gewichtsmittel) erfolgt, das eine Struktureinheit der allgemeinen Formel

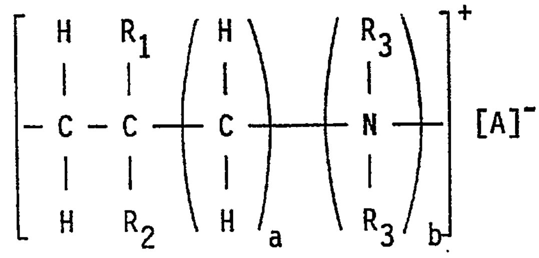

in der $R_1$ = H–, HO–, Alkylrest mit 1 bis 3 C-Atomen,

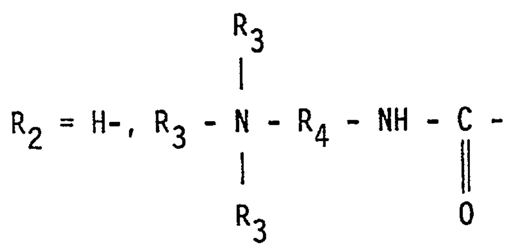

oder

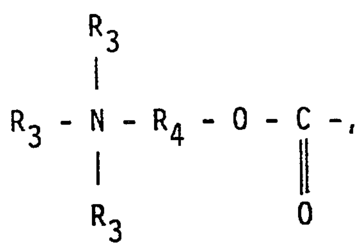

$R_3$ = H–, Alkyl- oder Alkylenrest mit 1 bis 6 C-Atomen,
$R_4$ = Alkylenrest mit 1 bis 12 C-Atomen,
b = 0 oder 1, wobei für b = 0 der Rest $R_2 \neq$ H und a = 0, für b = 1 der Rest $R_2$ = H und a = 0 oder 1 sein muß,
bedeuten und $[A]^-$ für das Hydroxidion oder Anion einer organischen oder anorganischen Säure steht.

2. Verfahren nach Anspruch 1, dadurch gekennzeichnet, daß das eingesetzte hochmolekulare Amin ein Molekulargewicht von $10^4$ bis $8 \cdot 10^6$ (bestimmt als Gewichtsmittel) aufweist.

3. Verfahren nach den Ansprüchen 1 und 2, dadurch gekennzeichnet, das das hochmolekulare Amin in Mengen von 0,3 bis 5 Gew.-Teilen – gerechnet auf 100 Gew.-Teile Kautschukfeststoff – dem Kautschuklatex zugesetzt wird.

4. Verfahren nach Anspruch 3, dadurch gekennzeichnet, daß das hochmolekulare Amin in Mengen von 0,3 bis 2 Gew.-Teilen – gerechnet auf 100 Gew.-Teile Kautschukfeststoff – dem Kautschuklatex zugesetzt wird.

5. Rieselfähige, gefüllte Kautschukpulver hergestellt gemäß den Ansprüchen 1 bis 4, dadurch gekennzeichnet, daß ein einzelnes Pulverkorn aus Primärteilchen mit einem Durchmesser von 3 bis 100 µm gebildet wird, wobei der Füllstoff zwischen den einzelnen Primärteilchen eingelagert ist.

**Claims**

1. A process for the preparation of a free-flowing, filled rubber powder by combining an aqueous rubber latex containing auxiliaries with an aqueous filler suspension with stirring, separating off the aqueous phase and subsequently drying the rubber powder with constant agitation, characterized in that the rubber latex and the filler suspension are combined in the presence of from 0.1 to 15 parts by weight – calculated on the basis of 100 parts by weight of rubber solids – of an amine having a molecular weight in the range from $10^4$ to $10^8$ (determined as the weight average), which contains a structural unit of the general formula

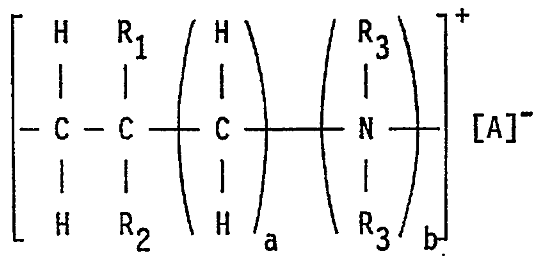

in which $R_1$ denotes H–, HO– or an alkyl radical having 1 to 3 C atoms,
$R_2$ denotes H–,

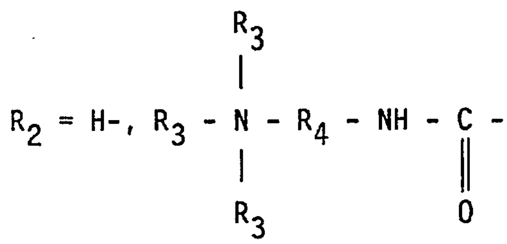

or

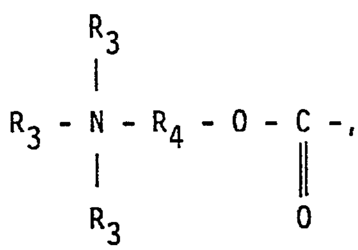

$R_3$ denotes H– or an alkyl or alkylene radical having 1 to 6 C atoms,
$R_4$ denotes an alkylene radical having 1 to 12 C atoms,
b is 0 or 1, where the radical $R_2 \neq H$ and a = 0 must be true for b = 0, and the radical $R_2$ = H and a = 0 or 1 must be true for b = 1,
and $[A]^-$ represents the hydroxide ion or the anion of an organic or inorganic acid.

2. A process according to claim 1, characterized in that the high-molecular-weight amine employed has a molecular weight of from $10^4$ to $8 \cdot 10^6$ (determined as the weight average).

3. A process according to claim 1 or 2, characterized in that the high-molecular-weight amine is added to the rubber latex in an amount of from 0.3 to 5 parts by weight – calculated on the basis of 100 parts by weight of rubber solids.

4. A process according to claim 3, characterized in that the high-molecular-weight amine is added to the rubber latex in an amount of from 0.3 to 2 parts by weight – calculated on the basis of 100 parts by weight of rubber solids.

5. A free-flowing, filled rubber powder prepared according to any of claims 1 to 4, characterized in that an individual powder grain is formed from primary particles having a diameter of from 3 to 100 µm, the filler being included between the individual primary particles.

**Revendications**

1. Procédé de préparation d'une poudre de caoutchouc chargée, capable de ruisseler, par réunion d'un latex aqueux de caoutchouc renfermant des adjuvants avec une suspension aqueuse d'une charge, par agitation, séparation de la phase aqueuse, ainsi que par séchage terminal de la poudre de caoutchouc en mouvement constant, caractérisé par le fait que la réunion du latex de caoutchouc et de la suspension de charge a lieu en présence de 0,1 à 15 parties en poids – relativement à 100 parties en poids de

substance caoutchouteuse – d'une amine d'un poids moléculaire compris dans un domaine de $10^4$ à $10^8$ (déterminé comme moyenne pondérale), qui présente une unité structurale de la formule générale

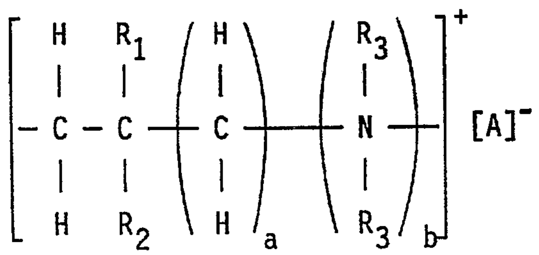

dans laquelle $R_1$ représente de l'hydrogène, un groupe hydroxyle, un radical alkyle comportant de 1 à 3 atomes de carbone,

$R_2$ représente de l'hydrogène, un radical

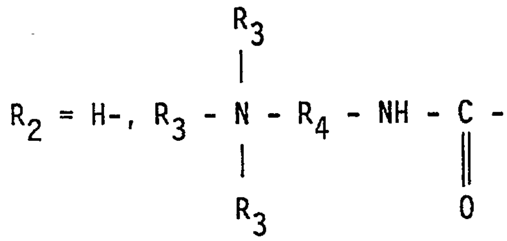

ou

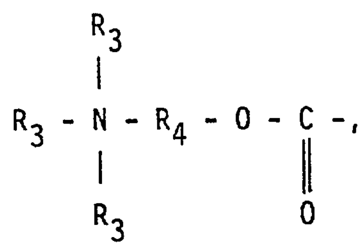

$R_3$ représentant de l'hydrogène, un radical alkyle ou alkylène comportant de 1 à 6 atomes de carbone,

$R_4$ représentant un reste alkylène comportant de 1 à 12 atomes de carbone, b est égal à zéro ou à l'unité, tandis que lorsque b est égal à zéro le reste $R_2$ ne doit pas être de l'hydrogène et que a doit être égal à zéro et que, lorsque b est égal à l'unité, le reste $R_2$ doit être de l'hydrogène et que a doit être égal à zéro ou à l'unité, et dans laquelle

[A] représente l'ion hydroxyde ou l'anion d'un acide organique ou minéral.

2. Procédé selon la revendication 1, caractérisé par le fait que l'amine de poids moléculaire élevé qui est utilisée présente un poids moléculaire de $10^4$ à $8 \cdot 10^6$ (déterminé comme moyenne pondérale).

3. Procédé selon les revendications 1 et 2, caractérisé par le fait que l'amine de poids moléculaire élevé est ajoutée au latex de caoutchouc dans des quantités de 0,3 à 5 parties en poids (relativement à 100 parties en poids de substance caoutchouteuse solide).

4. Procédé selon la revendication 3, caractérisé par le fait que l'amine de poids moléculaire élevé est ajoutée au latex de caoutchouc dans des quantités de 0,3 à 2 parties en poids (relativement à 100 parties en poids de substance caoutchouteuse solide).

5. Poudre de caoutchouc chargée, capable de ruisseler, préparée selon les revendications 1 à 4, caractérisée par le fait que l'on forme un grain de poudre unique à partir de particules primaires d'un diamètre de 3 à 100 µm, la charge étant incorporée entre les diverses particules primaires.